# EUROPÄISCHE PATENTSCHRIFT

(11) **EP 4 488 523 B1**
(45) Veröffentlichungstag und Bekanntmachung des Hinweises auf die Patenterteilung: **19.11.2025**
(21) Anmeldenummer: 24185986.7
(22) Anmeldetag: 02.07.2024
(51) Int. Cl.: F04C 2/107, F04C 15/00, F16D 3/30, F16D 3/00

(54) **EXZENTERSCHNECKENPUMPE**
ECCENTRIC SCREW PUMP
POMPE À VIS SANS FIN EXCENTRIQUE

(30) Priorität: 06.07.2023 DE 102023117805
(43) Veröffentlichungstag der Anmeldung: 08.01.2025
(73) Patentinhaber: NETZSCH Pumpen & Systeme GmbH, 95100 Selb (DE)
(72) Erfinder: Nübl, Philipp, 83555 Gars Bahnhof (DE); Sinseder, Dominik, 84405 Dorfen (DE); Mittermaier, Michael, 83567 Unterreit (DE); Bürger, Daniel, 84405 Dorfen (DE); Weigl, Stefan, 84453 Mühldorf (DE)
(74) Vertreter: Misselhorn, Hein-Martin

(56) Entgegenhaltungen:
- CZ-B6- 309 552
- DE-A1- 102011 014 284
- DE-A1- 102016 207 245
- DE-A1- 3 840 728
- DE-A1- 4 206 974
- DE-B3- 10 335 966
- US-A1- 2017 184 155

## Beschreibung

### GEBIET DER ERFINDUNG

Die Erfindung betrifft eine Exzenterschneckenpumpe mit einem Rotor, welcher eine Antriebswelle, einen Kraftstrang und eine Förderschnecke umfasst, nach dem Oberbegriff des Anspruchs 2 sowie den entsprechenden Kraftstrang nach dem Oberbegriff des Anspruchs 1. Die Erfindung betrifft ferner die Verwendung eines durch 3D-Druck urgeformten Kunststoffs oder Metallmaterials als Kraftstrang nach dem Anspruch 8, sowie ein Verfahren zur Herstellung eines Kraftstrangs nach dem Anspruch 9.

### TECHNISCHER HINTERGRUND

Exzenterschneckenpumpen gehören zur Gruppe der rotierenden Verdrängerpumpen und werden vor allem zur Förderung einer Vielzahl von Medien, insbesondere von dickflüssigen, hochviskosen und abrasiven Medien, genutzt. Die Dokumente DE 38 40 728 A1, DE 10 2016 207245 A1, DE 42 06 974 A1, DE 103 35 966 B3, DE 10 2011 014284 A1, US 2017/184155 A1 und CZ 309 552 B6 zeigen Exzenterschneckenpumpen gemäß dem Stand der Technik.

Die Hauptbestandteile einer Exzenterschneckenpumpe sind ein rotierender Rotor und ein feststehender Stator.

Der Rotor der Exzenterschneckenpumpe wird hierbei bevorzugt von einer Antriebswelle eines Antriebsmotors, einem Kraftstrang und einer Förderschnecke gebildet. Die Förderschnecke ist bevorzugt schraubenförmig gewunden und bewegt sich drehend oszillierend im feststehenden Stator. Die Förderschnecke ist derzeit meist einseitig gelenkig oder elastisch angebracht.

Die Förderschnecke bekommt ihr Antriebsdrehmoment über den Kraftstrang mitgeteilt und der Kraftstrang gleicht die Unterschiede der Bewegungsabläufe der Förderschnecke und der Antriebswelle aus. Hierbei muss bei der Rotationsbewegung vor allem die Exzentrizität zwischen Antriebswelle und Förderschnecke ausgeglichen werden.

Dies geschieht derzeit nach dem Stand der Technik meist mittels einer langen Kuppelstange mit jeweils einem Gelenk an jedem Ende der Kuppelstange, also ähnlich wie bei einer Kardanwelle.

Dies führt zu einer hohen Bauteilanzahl und einer großen Einbaulänge, vor allem durch die notwendige Länge der Kuppelstange. Deren Gelenke unterliegen einem Verschleißrisiko. Zudem ist nicht selten eine Schmierung der Gelenke notwendig, was einerseits einen Zusatzaufwand bedeutet und andererseits die Gefahr verursacht, dass das Schmiermittel in das zu fördernde Medium gelangen kann.

Kuppelstangen, die mit bekannten Herstellungsverfahren nach dem Stand der Technik erzeugt werden, haben teils einen hohen Verschleißanteil und sind wartungsaufwendig. Zudem ist deren Herstellung mit den derzeitigen Fertigungsverfahren meist teuer.

### AUFGABE DER ERFINDUNG

Dementsprechend ist es die Aufgabe der Erfindung, ein Mittel anzugeben, mit welchem eine leistungsfähige und dabei günstige Verbindung zwischen Antriebswelle und Förderschnecke realisiert werden kann.

### ERFINDUNGSGEMÄSSE LÖSUNG

Eine Lösung dieser Aufgabe bieten die Hauptansprüche 1, 8 und 9.

Hierzu wird eine Exzenterschneckenpumpe vorgeschlagen, welche einen Rotor umfasst, der eine im Wesentlichen um eine feste Achse relativ zum Stator in einem Lagerstuhl kreisende Antriebswelle, einen Kraftstrang und eine Förderschnecke umfasst, wobei die Förderschnecke drehend-oszillierend in einem Schneckengang des Stators umläuft.

Die Förderschnecke bekommt ihr Antriebsdrehmoment über den Kraftstrang mitgeteilt und der Kraftstrang gleicht - wie oben schon beschrieben - die Unterschiede der Bewegungsabläufe der Förderschnecke und der Antriebswelle aus.

Die erfindungsgemäße Exzenterschneckenpumpe zeichnet sich dadurch aus, dass der Kraftstrang im Wesentlichen aus einem einstückigen Rotationskörper besteht, der mehrfache, seine Außenumfangsmantelfläche mehr als nur unwesentlich unterbrechende Schwächungsausnehmungen aufweist, wobei diese Schwächungsausnehmungen bevorzugt in überwiegend oder im Wesentlichen radialer Richtung verlaufen. Die Schwächungsausnehmungen verlaufen auf jeden Fall dann in im Wesentlichen radialer Richtung, wenn die Höhe der Schwächungsausnehmung größer ist als die Breite der Schwächungsausnehmung, wobei die Höhe durch deren maximale Ausdehnung in radialer Richtung und die Breite durch deren maximale Ausdehnung in axialer Richtung festgelegt ist.

Die Schwächungsausnehmungen sind so gestaltet, dass sie dem Kraftstrang diejenige reversible Elastizität verleihen, die er benötigt, um sich um eine sich zumindest abschnittweise periodisch wiederkehrend krümmende Rotationsachse zu drehen. Diese zumindest abschnittweise periodisch wiederkehrend krümmende Rotationsachse bildet sich im Betrieb der Exzenterschneckenpumpe durch die oben schon angesprochenen Unterschiede der Bewegungsabläufe der Förderschnecke und der Antriebswelle zwischen diesen aus.

Der erfindungsgemäße Kraftstrang wird im Allgemeinen bevorzugt direkt oder indirekt einerseits an die Antriebswelle und andererseits an die Förderschnecke angeschlossen. Durch die Schwächungsausnehmungen und der damit verbundenen Elastizität des Kraftstrangs kann der Kraftstrang die angesprochene Exzentrizität ausgleichen, wobei der Kraftstrang dennoch die notwendige Steifigkeit bietet, um das Drehmoment sicher zu übertragen; auch bei veränderten und vor allem im Vergleich mit dem Stand der Technik verkürzten Anschlussabständen.

Da der Kraftstrang im Wesentlichen aus einem einstückigen Rotationskörper besteht, werden die Bauteilanzahl sowie die Herstellungskosten im Vergleich zum Stand der Technik deutlich gesenkt. Zudem kann die Einbaulänge im Vergleich zum Stand der Technik verkürzt werden. Da bevorzugt keine externen Gelenke zur Anbindung verwendet werden, kann auch hier der Wartungsaufwand und die Verschleißneigung reduziert werden.

Eine "Schwächungsausnehmung" des angesprochenen Rotationskörpers ist bevorzugt eine Aussparung und/oder Vertiefung, welche von dessen Außenumfangsmantelfläche im Wesentlichen radial in Richtung dessen Rotationsachse verläuft und dessen Außenumfangsmantelfläche somit unterbricht.

Diese Unterbrechung der Außenumfangsmantelfläche ist hierbei "mehr als nur unwesentlich", was (nicht nur, aber) zumindest dann erreicht ist, wenn eine Schwächungsausnehmung mindestens eine maximale Breite von 3 mm, bevorzugt sogar mindestens 5 mm, aufweist sowie eine maximale Höhe von mindestens 10 mm, bevorzugt sogar mindestens 15 mm.

Ein "einstückiges" Teil meint im Sinne der Erfindung auf jeden Fall ein zusammenhängendes Teil, welches zu mindestens 95% aus einem einheitlichen Material besteht und bevorzugt ein einstückig urgeformtes Teil.

### BEVORZUGTE AUSGESTALTUNGSMÖGLICHKEITEN DER ERFINDUNG

Eine bevorzugte Ausführungsform der erfindungsgemäßen Exzenterschneckenpumpe besteht darin, dass der den Kraftstrang bildende Rotationskörper im Wesentlichen aus einem - bevorzugt einstückig urgeformten - Polymermaterial und idealerweise Polyamid besteht oder aus einem - bevorzugt einstückig urgeformten - Metallmaterial besteht. So können die Herstellungskosten für den Kraftstrang niedrig gehalten werden, wobei dennoch die gewünschten Eigenschaften der Elastizität sowie Steifigkeit erreicht und meist auch sehr feinfühlig konstruktiv eingestellt werden können. Als für das hier zu bewältigende Problem besonders effektive und daher bevorzugte Lösung hat sich trotz des dadurch erzwungenen, bei derart großen Bauteilen nach wie vor extrem zeitaufwendigen Herstellungsprozesses das 3D-Drucken von Kunststoffen und/oder Metallen herausgestellt, insbesondere aus der pulverigen Ausgangsform heraus. Ein solcher 3D-Druck hinterlässt eine besondere Interkorn-Struktur, der betriebsbedingt in bestimmtem, zumindest grob steuerbarem Maße eine Schwächung im Bereich der Grenzen der miteinander verbundenen Körner innewohnt. Hierdurch entsteht ein eigenartiges, von anderen Urformverfahren für diese Werkstoffe abweichendes Flexibilitäts- und/oder Dämpfungsverhalten, das für die Zwecke der Erfindung genutzt wird und zu einer überraschend signifikanten Verbesserung des Ergebnisses führt.

Somit überrascht nicht, wenn in erster Näherung postuliert wird, dass es besonders bevorzugt ist, wenn der Kraftstrang im Schnitt - bevorzugt bei maximal 10-facher Vergrößerung betrachtet - eine Struktur aus Partikeln aufweist, die nicht vollständig ansatzlos miteinander verschmolzen sind. Die dadurch bewirkte "eingebaute" Porosität bzw. durch Mikrohohlräume geschwächte Gefügestruktur wirkt sich positiv auf das Federvermögen des Kraftstrangs aus.

Eine weitere bevorzugte Ausführungsform der erfindungsgemäßen Exzenterschneckenpumpe besteht darin, dass der den Kraftstrang bildende Rotationskörper aus mehreren Scheiben besteht, von denen unmittelbar benachbarte Scheiben über eine - ein- oder mehrgliedrige - Leiste miteinander verbunden sind, die derart elastisch ist, dass benachbarte Scheiben bei jedem Umlauf relativ zueinander eine im Regelfall reversibel-elastische (bevorzugt mit ≥ 0,75 mm in Richtung der Drehachse oder ihrer örtlichen Tangente auch mehr als nur unwesentliche) Wippbewegung um die Leiste ausführen können, wobei unmittelbar benachbarte Leisten in zueinander verdrehten Positionen angeordnet sind. Benachbarte bzw. unmittelbar benachbarte Leisten sind zudem idealerweise so zueinander verdreht angeordnet, dass die Leistenlängsachsen rechtwinklig zueinander verlaufen.

So kann einerseits die gewünschte Elastizität erreicht werden und andererseits die benötigte Steifigkeit zur Übertragung des Drehmoments gewährleistet werden.

Zudem ist es besonders bevorzugt, wenn der den Kraftstrang bildende Rotationskörper auf seiner der Förderschnecke abgewandten Seite ein Anschlussorgan aufweist, welches mit einem Formschlussorgan der Antriebswelle verdrehfest verbunden werden kann. So kann auf einfache Art und Weise eine drehmomentenübertragende Verbindung zwischen der Antriebswelle und dem Kraftstrang erreicht werden.

Weiterhin ist es besonders bevorzugt, wenn der den Kraftstrang bildende Rotationskörper auf seiner der Förderschnecke zugewandten Seite eine Öffnung oder einen rohrförmigen Fortsatz aufweist, die oder der so beschaffen ist, dass das Ende der Förderschnecke aufgrund seiner Schneckenform formschlüssig-verdrehfest darin festgesetzt werden kann. Bevorzugt weist die Öffnung oder der rohrförmige Fortsatz ebenfalls - zumindest teilweise - eine Schneckenform auf. So kann auf einfache Art und Weise eine drehmomentenübertragende Verbindung zwischen der Förderschnecke und dem Kraftstrang erreicht werden.

Darüber hinaus ist es besonders bevorzugt, wenn die Öffnung oder der rohrförmige Fortsatz auf der der Förderschnecke zugewandten Seite mindestens eine Gewindebohrung aufweist. Diese wird bevorzugt dafür verwendet, um eine Schraube oder einen Gewindestift, besonders bevorzugt eine Madenschraube, zur zusätzlichen Sicherung der Förderschnecke in der Öffnung oder in dem rohrförmigen Fortsatz einzubringen.

Weitere Ausgestaltungsmöglichkeiten, Wirkungsweisen und Vorteile ergeben sich aus der Beschreibung des Ausführungsbeispiels und/oder anhand der Figuren.

### FIGURENLISTE

Die Figur 1 zeigt eine erfindungsgemäße Exzenterschneckenpumpe in dreidimensionaler Ansicht.
Die Figur 2 zeigt einen erfindungsgemäßen Kraftstrang in dreidimensionaler Ansicht.
Die Figur 3 zeigt den erfindungsgemäßen Kraftstrang aus Figur 2 in der Draufsicht.
Die Figur 4 zeigt den erfindungsgemäßen Kraftstrang aus Fig. 2 mit angeschlossener Förderschnecke und alternativem Anschlussorgan.
Die Figur 5 zeigt ein weiteres Ausführungsbeispiel eines erfindungsgemäßen Kraftstrangs mit angedruckter Förderschnecke.
Die Figur 6 zeigt eine weitere Ausführungsform des erfindungsgemäßen Kraftstrangs mit zusätzlichen Rippen.

### BEVORZUGTE AUSFÜHRUNGSBEISPIELE

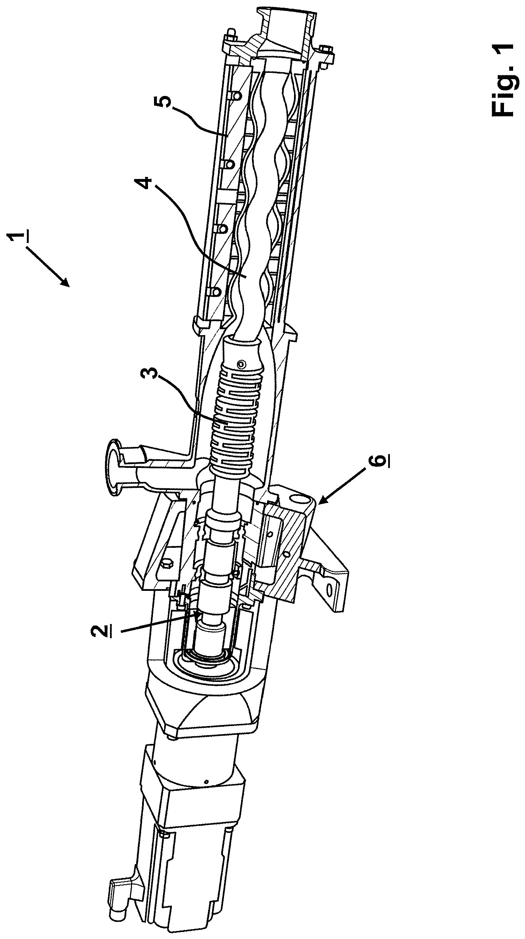

Figur 1 zeigt zunächst eine erfindungsgemäße Exzenterschneckenpumpe 1. Diese umfasst einen Rotor, welcher wiederum die Antriebswelle 2, den Kraftstrang 3 und die Förderschnecke 4 umfasst. Die Förderschnecke 4 läuft drehend-oszillierend im Stator 5 um. Wie in Fig. 1 gezeigt, kreist die Antriebswelle 2 in einem Lagerstuhl 6. Dieser Lagerstuhl 6 weist bevorzugt eine innenliegende Wälzlagerung auf. Der Kraftstrang 3 stellt bevorzugt die direkte Verbindung zwischen der Antriebswelle 2 und der Förderschnecke 4 dar.

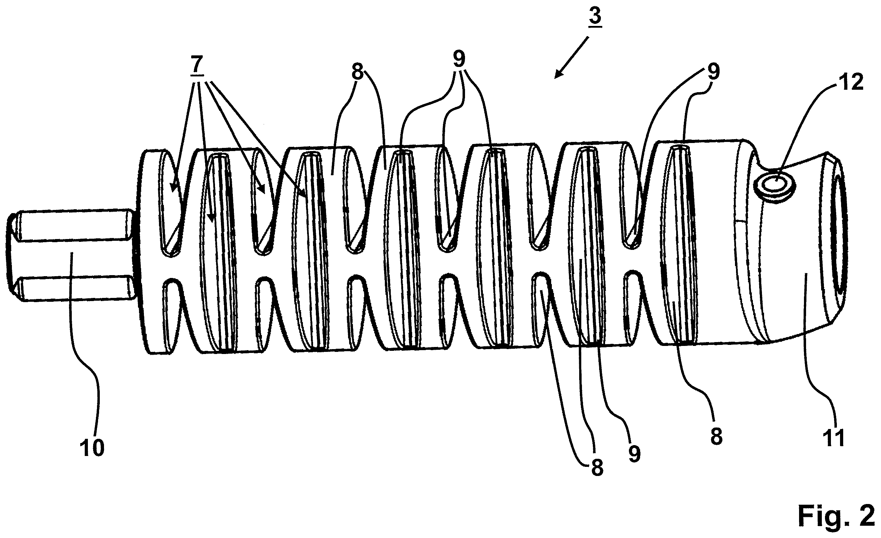

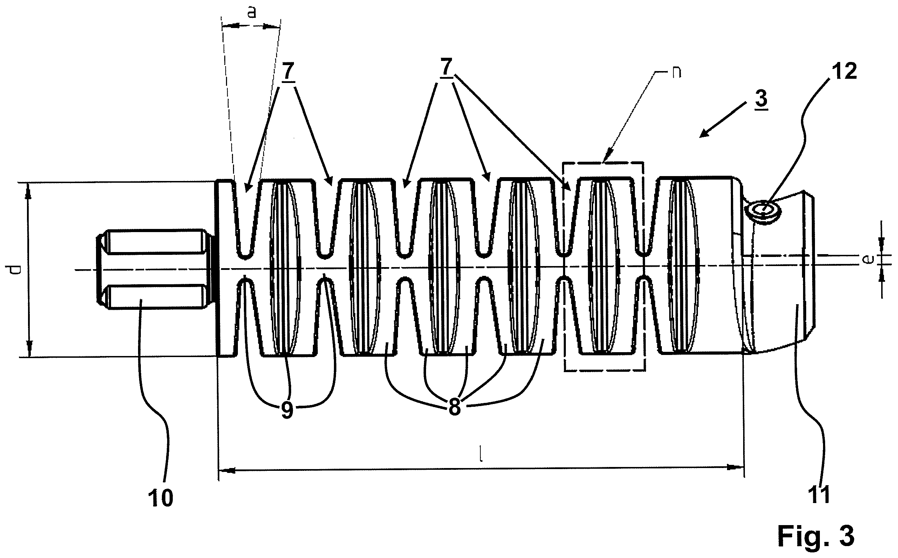

Ein erstes Ausführungsbeispiel dieses Kraftstrangs 3 ist in den Figuren Fig. 2 und Fig. 3 näher gezeigt. Der Kraftstrang 3 besteht im Wesentlichen aus einem einstückigen Rotationskörper, der mehrere Schwächungsausnehmungen 7 aufweist. Bevorzugt sind diese Schwächungsausnehmungen 7 derart ausgeführt und angeordnet, dass der Rotationskörper aus mehreren Scheiben 8 besteht, wobei unmittelbar benachbarte Scheiben 8 über eine Leiste 9 miteinander verbunden sind. Bevorzugt sind diese Leisten 9 so angeordnet, dass direkt benachbarte Leisten 9 so zueinander verdreht sind, dass die Leistenlängsachsen rechtwinklig zueinander verlaufen, vollständig oder zumindest im Wesentlichen.

Es ist bevorzugt, dass jeweils die äußerste Scheibe, also diejenige der Scheiben 8, die am nächsten zur Antriebswelle 2 liegt, und/oder diejenige der Scheiben 8, die am nächsten zur Förderschnecke 4 liegt, eine von den anderen Scheiben 8 abweichende Form aufweist. Bevorzugt sind diese äußersten Scheiben 8 dicker als die anderen Scheiben 8.

Bevorzugt direkt an die äußerste Scheibe 8, die am nächsten zur Antriebswelle 2 liegt, anschließend befindet sich das Anschlussorgan 10, welches mit einem Formschlussorgan der Antriebswelle 2 verdrehfest verbunden werden kann.

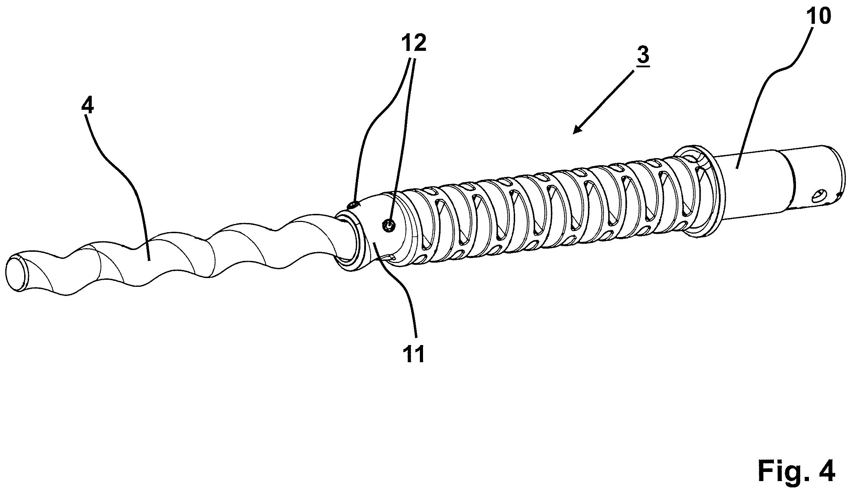

Bevorzugt direkt an die äußerste Scheibe 8, die am nächsten zur Förderschnecke 4 liegt, anschließend befindet sich eine Öffnung oder - wie im gezeigten Ausführungsbeispiel - ein rohrförmiger Fortsatz 11, wie in Fig. 2 und Fig. 3 gut erkennbar ist. Dieser rohrförmige Fortsatz 11 ist derart beschaffen, dass das Ende der Förderschnecke 4 aufgrund seiner Schneckenform formschlüssig-verdrehfest darin festgesetzt werden kann. Diese festgesetzte Position einer eingesteckten Förderschnecke 4 ist in Fig. 4 erkennbar. Bevorzugt zusätzlich ist an dem rohrförmigen Fortsatz 11 zudem noch eine Gewindebohrung (oft in einer metallenen, rundum an ihrem Umfangsmantel "umdruckten" Gewindebuchse) angebracht, besonders bevorzugt sogar direkt an die äußerste Schreibe 8 anschließend. Mithilfe dieser Gewindebohrung kann ein zusätzliches Sicherungselement, bevorzugt eine Schraube oder ein Gewindestift, besonders bevorzugt eine Madenschraube 12, eingeschraubt werden. Dies bietet meist eine Auszugssicherung gegen Längsauszug bzw. unerwünschtes Losdrehen im Rückwärtsbetrieb und/oder eine allgemeine Sicherung der Verbindung.

Die Fig. 3 zeigt darüber hinaus noch einige Maße, mit denen die bevorzugten Abmaße eines erfindungsgemäßen Kraftstrangs 3 dargelegt werden können. So ist es bevorzugt, dass der Winkel a zwischen zwei benachbarten Scheiben 8 bevorzugt in einem Bereich von 0° bis 30° liegt. Dies trägt zu einer gewünschten Flexibilität des Kraftstrangs 3 bei. Der Durchmessers d einer Scheibe 8 ist bevorzugt für alle Scheiben 8 eines Kraftstrangs im Wesentlichen gleich. Die Länge l bezeichnet bevorzugt das maximale Abmaß in axialer Richtung von der äußersten Scheibe 8, die am nächsten zur Förderschnecke 4 liegt, bis zur äußersten Scheibe 8, die am nächsten zur Antriebswelle 2 liegt. Das Verhältnis k des Durchmessers d zur Länge l liegt bevorzugt im Bereich zwischen 0,3 und 1. So ist die axiale Ausdehnung des Kraftstrangs 3 bevorzugt größer als die radiale Ausdehnung, was zur gewünschten Flexibilität beiträgt. Die Exzentrizität e ist bevorzugt der Abstand (oder auch: Lagedifferenz) zwischen der Achse des Anschlussorgans 10 und der Achse des vertikalen Abschlusses des rohrförmigen Fortsatzes 11, welcher von der Förderschnecke 4 weg zeigt. Das Verhältnis der Exzentrizität e zum Verhältnis k liegt bevorzugt im Bereich von 1 bis 4. Zudem ist ein wiederkehrender Abschnitt oder auch Rapport n in Fig. 3 zu erkennen. Das Verhältnis von n zu dem Verhältnis k liegt hierbei bevorzugt im Bereich von 5 bis 50.

Die Fig. 4 zeigt den in den Fig. 2 und Fig. 3 beschriebenen Kraftstrang 3, wobei hier ein alternatives Anschlussorgan 10 gezeigt ist, welches bevorzugt auf die äußerste Scheibe 8, die am nächsten zur Antriebswelle 2 liegt, aufgedruckt ist. Während das in den Figuren 2 und 3 gezeigte Anschlussorgan 10 bevorzugt von der Antriebswelle 2 formschlüssig-verdrehfest aufgenommen wird, nimmt das in Fig. 4 gezeigte Anschlussorgan 10 die Antriebswelle 2 formschlüssig-verdrehfest auf.

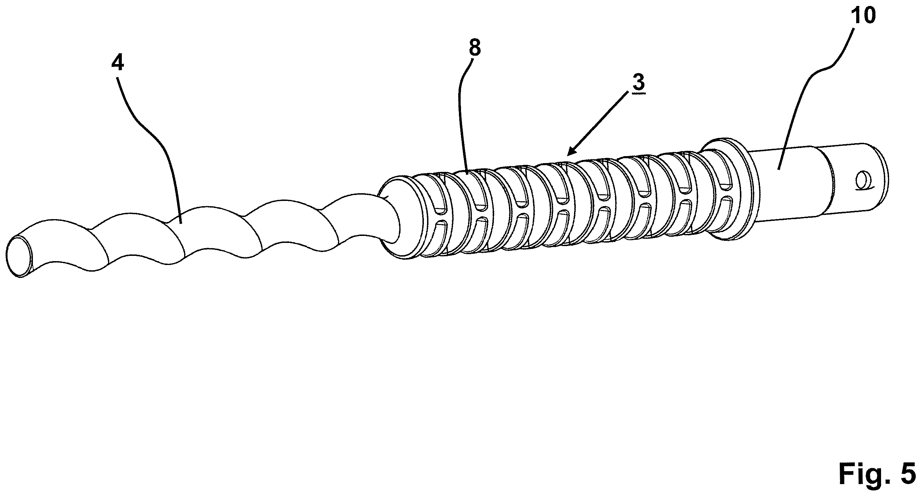

Die Fig. 5 zeigt eine weitere Ausführungsform des Kraftstrangs 3, wobei hier die äußerste Scheibe 8, die am nächsten zur Förderschnecke 4 liegt, direkt mit der Förderschnecke 4 verbunden ist, bevorzugt ist die äußerste Scheibe 8 mit der Förderschnecke 4 bedruckt. Der Kraftstrang 3 und vor allem dessen Scheiben 8 sind hierbei im Wesentlichen flach gestaltet. Im Vergleich hierzu sind die Scheiben 8 der ersten Ausführungsform gewölbt und/oder mit variabler Dicke ausgeführt. Beide Ausführungsformen der Scheiben 8 sind möglich.

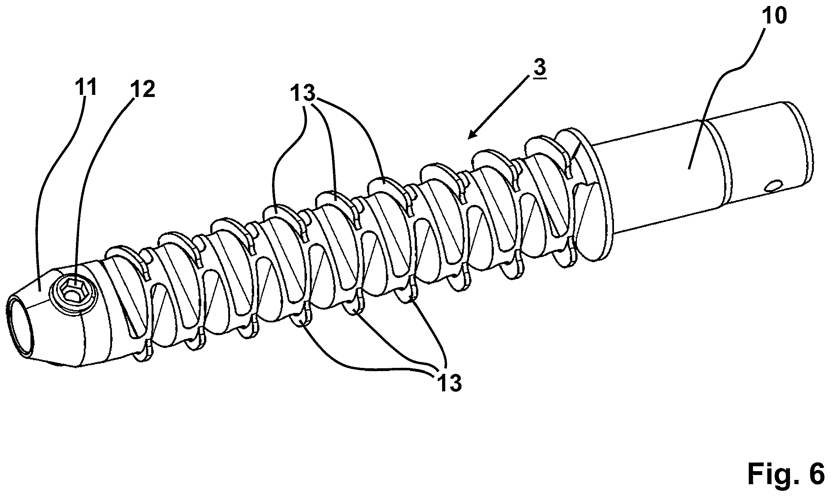

Die Figur 6 zeigt eine weitere Ausführungsform des erfindungsgemäßen Kraftstrangs mit zusätzlichen Rippen 13. Diese Rippen 13 übernehmen eine Förderwirkung und haben zur Folge, dass das Produkt in Richtung der Förderschnecke 3 vorangetrieben wird.

### BEZUGSZEICHENLISTE

- 1: Exzenterschneckenpumpe
- 2: Antriebswelle
- 3: Kraftstrang
- 4: Förderschnecke
- 5: Stator
- 6: Lagerstuhl
- 7: Schwächungsausnehmung
- 8: Scheibe
- 9: Leiste
- 10: Anschlussorgan
- 11: rohrförmiger Fortsatz
- 12: Madenschraube
- 13: Rippe

- a: Winkel
- d: Durchmesser
- e: Exzentrizität
- l: Länge
- n: Rapport

## Patentansprüche

1. Kraftstrang (3) einer Exzenterschneckenpumpe (1), wobei der Kraftstrang (3) im Wesentlichen aus einem einstückig urgeformten Rotationskörper besteht, der mehrfache, seine Außenumfangsmantelfläche mehr als nur unwesentlich unterbrechende Schwächungsausnehmungen (7) aufweist, die ihm diejenige reversible Elastizität verleihen, die er benötigt, um sich um eine sich zumindest abschnittweise periodisch wiederkehrend krümmende Rotationsachse zu drehen, **dadurch gekennzeichnet, dass** der Kraftstrang (3) im Schnitt eine Struktur aus Partikeln aufweist, die nicht vollständig ansatzlos miteinander verschmolzen sind, wobei die Schwächungsausnehmung mindestens eine maximale Breite von 3 mm, bevorzugt sogar mindesten 5 mm, aufweist sowie eine maximale Höhe von mindestens 10 mm, bevorzugt sogar mindestens 15 mm.

2. Exzenterschneckenpumpe (1) mit einem Rotor aus einer im Wesentlichen um eine feste Achse relativ zum Stator (5) in einem Lagerstuhl (6) kreisenden Antriebswelle (2), einem Kraftstrang (3) und einer Förderschnecke (4), die drehend-oszillierend in einem Schneckengang des Stators (5) umläuft, wobei die Förderschnecke (4) ihr Antriebsdrehmoment über den Kraftstrang (3) mitgeteilt bekommt und der Kraftstrang (3) die Unterschiede der Bewegungsabläufe der Förderschnecke (4) und der Antriebswelle (2) ausgleicht, wobei der Kraftstrang (3) ein Kraftstrang nach Anspruch 1 ist.

3. Exzenterschneckenpumpe (1) nach Anspruch 2, **dadurch gekennzeichnet, dass** der den Kraftstrang (3) bildende Rotationskörper im Wesentlichen aus einem Polymermaterial und idealerweise Polyamid besteht oder aus einem Metallmaterial besteht.

4. Exzenterschneckenpumpe (1) nach einem der Ansprüche 2 oder 3, **dadurch gekennzeichnet, dass** der den Kraftstrang (3) bildende Rotationskörper aus mehreren Scheiben (8) besteht, von denen unmittelbar benachbarte Scheiben (8) über eine Leiste (9) miteinander verbunden sind, die derart elastisch ist, dass benachbarte Scheiben (8) bei jedem Umlauf relativ zueinander eine Wippbewegung um die Leiste (9) ausführen können, wobei unmittelbar benachbarte Leisten (9) in zueinander verdrehten Positionen angeordnet sind.

5. Exzenterschneckenpumpe (1) nach einem der Ansprüche 2 bis 4, **dadurch gekennzeichnet, dass** der den Kraftstrang (3) bildende Rotationskörper auf seiner der Förderschnecke (4) abgewandten Seite ein Anschlussorgan (10) aufweist, welches mit einem Formschlussorgan der Antriebswelle (2) verdrehfest verbunden werden kann.

6. Exzenterschneckenpumpe (1) nach einem der Ansprüche 2 bis 5, **dadurch gekennzeichnet, dass** der den Kraftstrang (3) bildende Rotationskörper auf seiner der Förderschnecke (4) zugewandten Seite eine Öffnung oder einen rohrförmigen Fortsatz (11) aufweist, die oder der so beschaffen ist, dass das Ende der Förderschnecke (4) aufgrund seiner Schneckenform formschlüssig-verdrehfest darin festgesetzt werden kann.

7. Exzenterschneckenpumpe (1) nach dem unmittelbar vorhergehenden Anspruch, **dadurch gekennzeichnet, dass** die Öffnung oder der rohrförmige Fortsatz (11) auf der der Förderschnecke (4) zugewandten Seite mindestens eine Gewindebohrung, bevorzugt zur Aufnahme einer Madenschraube (12), aufweist.

8. Verwendung eines durch 3D-Druck, bevorzugt aus der pulvrigen Phase urgeformten Kunststoffs oder Metallmaterials als Kraftstrang (3) zur drehmomentübertragenden Verbindung von zwei Bauteilen, die Drehbewegungen um unterschiedliche Achsen ausführen, **dadurch gekennzeichnet, dass** der Kraftstrang (3) ein Kraftstrang (3) nach Anspruch 1 ist.

9. Verfahren zur Herstellung eines Kraftstrangs (3) nach Anspruch 1, **dadurch gekennzeichnet, dass** aus einem pulverförmigen Kunststoff und/oder Metall mittels 3D-Druck ein Kraftstrang (3) hergestellt wird.

## Claims

1. Drive train (3) of an eccentric screw pump (1), wherein the drive train (3) essentially consists of a rotationally symmetrical body formed in one piece, which has multiple weakening recesses (7) that interrupt its outer circumferential surface to a more than insignificant degree, giving it the reversible elasticity it needs to rotate about a rotationally symmetrical axis that curves at least periodically in sections, **characterized in that** the power train (3) comprises in cross-section a structure consisting of particles that are not completely fused together without any joints, wherein the weakening recess has a maximum width of at least 3 mm, preferably even at least 5 mm, and a maximum height of at least 10 mm, preferably even at least 15 mm.

2. Eccentric screw pump (1) with a rotor consisting of a drive shaft (2) that rotates in a bearing block (6) around a fixed axis relative to the stator (5), a power train (3) and a delivery screw (4) that circulates in a rotating and oscillating manner in a screw thread of the stator (5), wherein the delivery screw (4) receives its drive torque via the power train (3) and the power train (3) compensates for the differences in the movement sequences of the delivery screw (4) and the drive shaft (2), wherein the power train (3) is a power train according to claim 1.

3. Eccentric screw pump (1) according to claim 2, **characterized in that** the rotating body forming the power train (3) consists essentially of a polymer material, ideally polyamide, or consists of a metal material.

4. Eccentric screw pump (1) according to one of claims 2 or 3, **characterized in that** the rotating body forming the power train (3) consists of several discs (8), of which immediately adjacent discs (8) are connected to each other via a bar (9) which is elastic in such a way that adjacent discs (8) can perform a rocking movement relative to each other around the bar (9) during each revolution, whereby directly adjacent bars (9) are arranged in positions twisted relative to each other.

5. Eccentric screw pump (1) according to one of claims 2 to 4, **characterized in that** the rotating body forming the power train (3) has a connecting member (10) on its side facing away from the feed screw (4), which can be connected in a rotationally fixed manner to a form-fitting member of the drive shaft (2).

6. Eccentric screw pump (1) according to one of claims 2 to 5, **characterized in that** the rotating body forming the power train (3) has an opening or a tubular extension (11) on its side facing the screw conveyor (4), which is designed in such a way that the end of the screw conveyor (4) can be fixed in it in a form-fitting and rotationally secure manner due to its screw shape.

7. Eccentric screw pump (1) according to the immediately preceding claim, **characterized in that** the opening or tubular extension (11) on the side facing the screw conveyor (4) has at least one threaded bore, preferably for receiving a grub screw (12).

8. Use of a plastic or metal material formed by 3D printing, preferably from the powder phase, as a power train (3) for the torque-transmitting connection of two components that perform rotational movements about different axes, **characterized in that** the power train (3) is a power train (3) according to claim 1.

9. Method for manufacturing a power train (3) according to claim 1, **characterized in that** a power train (3) is manufactured from a powdered plastic and/or metal by means of 3D printing.

## Revendications

1. Chaîne cinématique (3) d'une pompe à vis excentrique (1), la chaîne cinématique (3) est essentiellement constitué d'un corps de rotation moulé d'un seul tenant, qui présente de multiples évidements d'affaiblissement (7) interrompant de manière plus que négligeable sa surface d'enveloppe périphérique extérieure, qui lui confèrent l'élasticité réversible dont il a besoin pour tourner autour d'un axe de rotation se courbant de manière périodique au moins par sections, **caractérisé en ce que** la chaîne de force (3) présente en coupe une structure composée de particules qui ne sont pas complètement fusionnées entre elles, l'évidement d'affaiblissement présentant une largeur maximale d'au moins 3 mm, de préférence même d'au moins 5 mm, ainsi qu'une hauteur maximale d'au moins 10 mm, de préférence même d'au moins 15 mm.

2. Pompe à vis excentrique (1) avec un rotor composé d'un arbre d'entraînement (2) tournant essentiellement autour d'un axe fixe par rapport au stator (5) dans un palier (6), une chaîne cinématique (3) et une vis de transport (4) qui circule de manière tournate oscillante dans une vis sans fin du stator (5), la vis de transport (4) recevant son couple d'entraînement via la chaîne cinématique (3) et la chaîne cinématique (3) compensant les différences entre les mouvements de la vis de transport (4) et de l'arbre d'entraînement (2), la chaîne cinématique (3) étant une chaîne cinématique selon la revendication 1.

3. Pompe à vis excentrique (1) selon la revendication 2, **caractérisée en ce que** le corps rotatif formant la chaîne cinématique (3) est essentiellement constitué d'un matériau polymère, idéalement du polyamide, ou d'un matériau métallique.

4. Pompe à vis excentrique (1) selon l'une des revendications 2 ou 3, **caractérisée en ce que** le corps rotatif formant la chaîne cinématique (3) est constitué de plusieurs disques (8), dont les disques immédiatement adjacents (8) sont reliées entre elles par une barre (9) qui est suffisamment élastique pour que les disques adjacents (8) puissent effectuer un mouvement de basculement relatif les uns par rapport aux autres autour de la barre (9) à chaque tour, les barres immédiatement adjacentes (9) étant disposées dans des positions tournées les unes par rapport aux autres.

5. Pompe à vis excentrique (1) selon l'une des revendications 2 à 4, **caractérisée en ce que** le corps rotatif formant la chaîne cinématique (3) comporte, sur son côté opposé à la vis d'alimentation (4), un organe de raccordement (10) qui peut être relié de manière solidaire en rotation à un organe de liaison par complémentarité de forme de l'arbre d'entraînement (2).

6. Pompe à vis excentrique (1) selon l'une des revendications 2 à 5, **caractérisée en ce que** le corps rotatif formant la chaîne cinématique (3) présente, sur son côté tourné vers la vis sans fin (4), une ouverture ou un prolongement tubulaire (11) qui est conçu de telle sorte que l'extrémité de la vis sans fin (4) peut y être fixée de manière solidaire en rotation grâce à sa forme hélicoïdale.

7. Pompe à vis excentrique (1) selon la revendication précédente, **caractérisée en ce que** l'ouverture ou le prolongement tubulaire (11) présente, sur le côté tourné vers la vis sans fin (4), au moins un alésage fileté, de préférence destiné à recevoir une vis sans tête (12).

8. Utilisation d'un matériau plastique ou métallique moulé par impression 3D, de préférence à partir de la phase pulvérulente, comme chaîne de transmission (3) pour la liaison transmettant le couple de deux composants qui effectuent des mouvements de rotation autour d'axes différents, **caractérisée en ce que** la chaîne de transmission (3) est une chaîne de transmission (3) selon la revendication 1.

9. Procédé de fabrication d'un arbre de transmission (3) selon la revendication 1, **caractérisé en ce qu'**un arbre de transmission (3) est fabriqué à partir d'une matière plastique pulverulante et/ou d'un métal pulvérulent au moyen d'une impression 3D.
